# EUROPEAN PATENT SPECIFICATION

(11) **EP 2 077 943 B1**
(45) Date of publication and mention of the grant of the patent: **13.02.2013**
(21) Application number: 07824392.0
(22) Date of filing: 31.10.2007
(51) Int. Cl.: B32B 27/08, B32B 27/36, B32B 1/02

(54) **HEAT-SEALABLE COMPOSITE POLYESTER FILM**
HEISSSIEGELBARE VERBUNDPOLYESTERFOLIE
FILM DE POLYESTER COMPOSITE SCELLABLE À CHAUD

(30) Priority: 01.11.2006 GB 0621777; 16.08.2007 GB 0716014
(43) Date of publication of application: 15.07.2009
(73) Proprietor: DuPont Teijin Films U.S. Limited Partnership, Chester, VA 23836 (US)
(72) Inventor: BERRY, Michael, R., Cleveland TS14 8PL (GB); BRENNAN, William, J., Cleveland TS9 6DS (GB); DENG, Fenghua, Richmond, VA 23233 (US); SANDERS, Daniel, C., Richmond, VA 23238 (US)
(74) Representative: Cockerton, Bruce Roger
(86) International application number: PCT/GB2007/004148
(87) International publication number: WO 2008/053205

(56) References cited:
- EP-A- 0 712 719
- WO-A-2007/093798

## Description

This invention is broadly concerned with packaging, particularly packaging of food products and particularly ovenable food products. The invention relates, *inter alia,* to a multi-layer polymeric film suitable for use as packaging for a container, particularly a container of ready-prepared ovenable meals, and the invention particularly relates to a multi-layer film which is heat-sealable to and peelable from a container. The invention is further concerned with packaging for fresh and frozen food products, particularly meat and fish.

Plastic containers have been increasingly used in packaging applications, such as food packaging, and in particular for packaging convenience foods, for example ready-prepared ovenable meals which may be warmed either in a microwave oven or in a conventional oven or in either. A container which is suitable for use either in a microwave oven or a conventional oven is generally referred to as "dual-ovenable". Often the plastic container is an APET/CPET tray (a composite material having an amorphous polyethylene terephthalate layer on top of a crystalline polyethylene terephthalate layer). Polystyrene and polypropylene containers have also been used. The plastic container is generally used in association with a lid which seals the container in order to prevent leakage and drying out of the packaged contents during storage. In addition, the lid should not stick to the packaged contents and should be able to withstand the heat generated in the oven. Such container lids normally comprise a multi-layer film, often referred to as a "lidding film", which comprises a flexible polymeric substrate, such as biaxially oriented polyester film, and a heat-sealable coating layer.

The manufacture of sealed containers using lidding films involves the formation of a seal between the lidding film and the container. This seal is formed by placing the lid on top of the container and applying heat and pressure in order to soften or melt the sealable coating layer so that it adheres to the surface of the container and forms an effective seal between the lid and the container. The seal must be strong enough to prevent leakage of the contents. The film lid should be peelable from the container by the consumer and in such cases the seal must be strong enough to prevent leakage of the contents but not too strong to result in difficulties in removing the lid when the container is to be opened. In particular, the lid should not tear during peeling, which could result in portions of the film lid falling into the contents of the container thereby spoiling the food. A strong seal and easy-peeling properties, i.e. a clean peel, may be required at both low, e.g. ambient, and high temperatures, e.g. after heating the packaged food contents in an oven.

In addition, when disposing a food product in the container to be sealed, solids or liquids from the food product or other contaminants may come into contact with, and remain on, the top surface of the lip of the container which is to be sealed to the lidding film. This may result in poor seal properties between the container and the lid, and eventually a weak overall package. A film which performs well in this respect, i.e. which shows good seal properties despite the presence of contaminants between the lid and the container, is said to exhibit good "seal through contamination", and this is a further desirable property for these heat-sealable lidding films. In conventional lidding films, this problem is typically addressed by increasing the thickness of the heat-seal layer, for instance, to about 25 µm or above, which is economically disadvantageous.

It is also desirable that the packaging should be such that it does not give the consumer the impression that the packaging has in some way deteriorated as a result of the high temperatures experienced during the cooking cycle. Thus, it is desirable that a clear packaging film does not whiten during the cooking cycle.

A further desirable sealing property is the characteristic of good "hot-tack" adhesion. This property essentially measures the speed at which a heat-seal bond is formed when a heated and softened (or molten) heat-sealable film is contacted with the surface to which it is to be sealed. Hot-tack adhesion essentially therefore corresponds to the property of heat-bond seal strength, but wherein hot-tack adhesion is measured after a much smaller time interval (typically 0.1 second) after the heat-seal bond is initiated. Heat-seal bond strength is measured once the heat-seal bond has completely formed, and normally after the heat-seal bond has cooled to ambient temperature, and can be referred to as the "cold heat-seal bond strength". Good hot-tack adhesion is important for quick, efficient and reliable packaging. In addition, in circumstances where the food to be packaged is sufficiently bulky that it protrudes above the lip of the container, the formation of a rapid heat-seal bond is desired. Typically, hot-tack adhesion is approximately proportional to the cold heat-seal bond strength, but while it is desirable to maximise hot-tack adhesion, if the hot-tack adhesion is too high then the cold heat-seal bond strength may be too strong to allow an easy and clean peel. In general, the hot-tack adhesion increases as the molecular weight of the heat-sealable polymer increases. Many thermoplastic polymers display hot-tack adhesion to some degree, albeit at different temperatures and viscosities.

In many prior art films, the heat-sealable layer is applied to the substrate using either an organic solvent, or an aqueous dispersion or solution. The use of organic solvents is generally disadvantageous because they may be harmful, hazardous in use, or toxic and detrimental to the environment. In addition, films made in this way often contain a residual amount of solvent, and so may not be suitable for use in applications where they come into contact with food products. The use of organic solvents usually involves an "off-line" coating step, i.e. after any stretching and subsequent heat-setting operation employed during the manufacture of the substrate, since such solvents can cause sticking or blocking of the film during the normal winding operations used during film manufacture. The use of an aqueous dispersion or solution, such as in the process of WO-A-96/19333, avoids the use of substantial amounts of organic solvents; allows the use of a more economical and efficient "in-line" coating process, i.e. wherein the coating layer is applied either before the film substrate is stretched or between the stretching steps of a biaxial stretching process; but is limited to coating compositions which are soluble or adequately dispersible in water. An in-line process avoids the use of the further heating or drying steps which are encountered in off-line coating processes, particularly off-line solvent-coating processes. These processes can embrittle the film and deteriorate the tensile properties. In general, an in-line coated film has therefore superior mechanical properties. Heat-sealable films have also been manufactured by other in-line coating techniques. For instance, GB-2024715 discloses the application of a polyolefinic material onto a polyolefinic substrate using an extrusion-coating technique between the longitudinal and transverse stretching operations ("inter-draw" coating). A process for the in-line inter-draw extrusion-coating of polyolefins onto a polyester substrate to produce a heat-sealable film is disclosed in GB-1077813. US-4333968 discloses a method for the inter-draw extrusion coating of an ethylene-vinyl acetate (EVA) copolymer onto a polypropylene substrate to provide a heat-sealable peelable film.

A further aspect of the packaging films disclosed herein is their use as "cook-in" packaging, in which a food product is pre-cooked and shipped to the wholesaler, retailer or consumer. Cook-in packaging may comprise a tray within which is disposed the food product and a polymeric lidding film heat-sealed to the tray, or may comprise a polymeric film or bag which forms the whole of the packaging around the food product. These types of food products may be warmed in a conventional or microwave oven, without the need for the consumer to remove the packaging prior to warming. Thus, it is known to package raw meats in shrinkable polymeric film bags which are shrink-wrapped around the meat, and the consumer cooks the meat whilst it remains in the packaging. Such "cook-in" packaging is becoming increasingly popular since it reduces the amount of time spent preparing meals and requires little cooking skill from the consumer. Packaging of the type described above has been disclosed in, *inter alia,* US-4820536, US-5552169, US-6623821, US-2003/0021870-A1, WO-2003/061957-A1, WO-02/26493-A1 and WO-03/026892-A1. The "cook-in" concept is particularly desirable since it avoids the need for the consumer to handle raw meat or fish, which some consumers find disagreeable. Moreover, the handling of raw meat or fish is a growing concern from a food-safety perspective, and a pre-packaged cook-in food product reduces the risk of contamination. Convenience for the consumer can also be increased since cooking instructions can be provided in association with the packaging product. In addition, the pre-packaging of food products can be used as a mechanism of portion control, which is becoming desirable in an increasingly health-conscious market-place. Pre-packaging may also improve consumer-convenience by allowing a reduction in the duration of the cook cycle, whilst ensuring that the packaged food product can be properly and safely cooked by allowing the food contents to achieve a sufficiently high core temperature to kill pathogens and bacteria. However, it is also important to balance the convenience of cook-in packaging with the taste and texture characteristics of the cooked food product, and it would also be desirable to provide consumers with seasoned or marinated pre-packaged cook-in food products.

In some circumstances, sealant films are also required to be shrinkable or thermo-formable, and not all conventional manufacturing processes for making sealant films would be suitable. For example, a non-shrink polyester sealant film can be made by solvent-coating a copolyester sealant layer on a non-shrinkable PET base film. However, solvent coating such a copolyester on a shrinkable PET base layer, or a thermo-formable PET base layer, is difficult because the amount of heat that can be applied to the base substrate is very limited.

EP 0 712 719 A discloses a shrinkable coextruded polyester laminated film for use as a lid in ovenable food packagings, comprising a base film layer of a polyester resin and a sealant film layer of a polyester composition, said sealant film layer being disposed on at least one side of said base film layer and containing one or more wax(es). The sealant film is preferably made from a blend of copolyesters, whereas the substrate layer can be selected from any (co)polyester.

It is an object of the present invention to address one or more of the aforementioned problems and provide an improved and more economical packaging means, particularly for food products, particularly for ovenable food products, and particularly for a ready-prepared ovenable meal. It is a further object of this invention to provide a heat-sealable, and preferably also peelable, film suitable for use as a packaging means, particularly for food products, particularly for ovenable food products, and particularly for a ready-prepared ovenable meal.

According to the present invention there is provided a heat-sealable, coextruded composite polymeric film comprising a substrate layer comprising a first copolyester material having on a surface thereof a heat-sealable layer comprising a second copolyester material wherein:
(i) the first and second copolyester materials are different from each other;
(ii) the copolyester of the substrate layer comprises an aromatic dicarboxylic acid and a saturated aliphatic dicarboxylic acid of formula CₙH₂ₙ(COOH)₂ wherein n is 2 to 8;
(iii) the heat-sealable layer comprises one or more wax(es);
(iv) the Tg of the copolyester of the heat-sealable layer is no more than 20°C; and
(v) the composite film is shrinkable or thermoformable.

According to a further aspect of the present invention there is provided a process for the production of a heat-sealable, composite polymeric film which comprises the steps of coextruding a substrate comprising a first copolyester material and a heat-sealable layer comprising a second copolyester material wherein:
(i) the first and second copolyester materials are different from each other;
(ii) the copolyester of the substrate layer comprises an aromatic dicarboxylic acid and a saturated aliphatic dicarboxylic acid of formula CₙH₂ₙ(COOH)₂ wherein n is 2 to 8;
(iii) the heat-sealable layer comprises one or more wax(es); and
(iv) the composite film is shrinkable or thermoformable, according to claims 1 and 2.

The composite film is preferably also peelable.

Thus, the present invention is suitable not only for the preparation of shrinkable composite films, but also thermo-formable composite films, and this is achieved primarily by selection of the polymeric material of the substrate layer. Shrinkage or thermo-formable characteristics are imparted by appropriate compositional features and process conditions, as discussed in more detail below.

Preferably, the shrinkage of a shrinkable composite film is at least 10% in both the machine dimension and the transverse dimension, preferably at least 25%, and preferably at least 40%. The shrinkage is measured on the composite film itself, rather than the substrate in isolation. Methods of controlling shrinkage in the final film by varying process parameters during the stretching and heat-setting steps of film manufacture are well-known to the skilled person, and discussed in more detail below.

A thermoforming process is a process which comprises the steps of heating a film to a temperature (T₁) wherein T₁ is above the glass transition temperature (Tg) of the material, and if the material exhibits a crystalline melting temperature (Tₘ) wherein T₁ is below the crystalline melting temperature, and then subjecting the material to deformation, i.e. deforming the material while it is in its softened, rubbery, solid state. A thermoformable film must:
(i) reversibly soften at temperatures above the glass transition temperature (Tg) thereof and, if the material exhibits a crystalline melting temperature (Tₘ), below the crystalline melting temperature, at which temperatures the material assumes a rubbery solid state such that it is deformable by an external force; and
(ii) once the film has been cooled below its glass transition point, retain the deformation which was introduced into the film while at a temperature above the glass transition point.

In addition, the elongation (strain) at break (ETB) should be greater than the strains experienced during the thermoforming operation, and the tensile strength at maximum elongation (UTS) should be greater than the yield stress.

Suitable thermoformable films are commercially available and the skilled person would be well aware of their methods of manufacture and the characteristics thereof. Thermoformability is indicated by the stress-strain curve above the glass transition temperature of the material (see, for instance, "Thermoforming" by James L. Throne (Pub. Karl Henser Verlag, Munich 1987; ISBN 3-446-14699-7). A thermoformable polymeric film is characterised by a relatively low force required to stretch a film above its Tg and a relatively high extent of stretching, when compared with a standard polymeric film. Quantitative assessment of thermoformability via measurement of UTS and ETB, measured according to ASTM D882, has been found unsatisfactory since such measurements on thermoformable films have been found to be relatively inaccurate at temperatures above Tg. Breaking often occurs just above the grips when using a strip of film with a rectangular shape, leading to inaccurate data. Breaking occurs at lower elongation than expected when using a dog bone shape for the film sample as a result of notching when cutting the strip, also leading to inaccurate measurements. Assessment of thermoformability is more suitably achieved by measuring one or more of the Young's modulus, the yield stress and the post-yield modulus, particularly the yield stress and the post-yield modulus, of the film at temperatures above Tg, as described hereinbelow. Measurement of these parameters at various temperatures above Tg provides a general indication of the thermoformability of the film, but the stress-strain behaviour is essentially critical only at the temperature of the thermoforming process, which depends on such factors as the identity and thickness of the film, the degree of deformation (or "draw") required, the apparatus used and the magnitude and rate of the deformation strain applied. More fundamentally, of course, thermoformability requires that the deformed film retains the deformed shape, once cooled. Accordingly, the important characteristic of a thermoformable film is therefore the relaxation of induced stress at the processing temperature after stretching the film to the desired strain. The characteristic is usually expressed as a percentage of stress retained after a defined time period (in seconds), or as the time required to relax stress by a defined percentage, and in a thermoformable film the values of these parameters should be as low as possible, as is well known in the art (see for instance "Viscoelastic Properties of Polymers"; John D. Ferry, page 8 et seq., 3rd Ed, Wiley, NY; ISBN 0-471-04894-1; and "Mechanical Properties of Solid Polymers", I. M. Ward, 2nd Ed., John Wiley)).

The crystallinity percentage (X) in a film may also give an indication of the ability of a film to thermoform. In one embodiment, the copolyester substrate has a crystallinity percentage (X) below 50%, more preferably below 45%, more preferably in the range from 5 to 42%, more preferably in the range from 3 to 40%.

The composite film described herein is preferably a heat-sealable and peelable film. As used herein, the term "heat-sealable peelable film" refers to a film which is capable of forming a seal to a surface under the application of heat, wherein the seal is breakable without fracture of the film. The preferred peelable characteristic of the films described herein distinguishes them from high-seal strength or "weldable" films.

A composite film according to the present invention typically exhibits a heat-seal strength (at ambient temperature) in the range of from 200 to 1800g/25mm, preferably 200 to 1500g/25mm, preferably 200 to 1400g/25mm, preferably at least 300g/25mm, preferably at least 400g/25mm, and preferably no more than 1200g/25mm, more preferably no more than 1000g/25mm, when sealed to the APET side of a typical APET/CPET tray. In one embodiment, the heat-seal strength is preferably in the range of from 200 to 1200g/25mm, and more preferably in the range of from 400 to 900 g/25mm when sealed to the APET side of a typical APET/CPET tray. Typical heat seal strengths of the film to itself are in the range of from 200 to 1400g/25mm, preferably in the range of from 400 to 600g/25mm.

The strength of the heat-seal bond may be varied in order to achieve the required performance before, during and after the cooking cycle. The strength of the heat-seal bond may be varied by varying the chemistry and thickness of the heat-seal layer, as well as the process conditions used to form the heat-seal bond. In a first embodiment, the heat-seal bond is intended to be peelable by the consumer, and the heat-seal bond strength is sufficiently strong that the heat-seal bond is not broken during the cooking cycle, whilst allowing the consumer to peel the film upon completion of the cooking cycle. In this embodiment, the heat-seal bond strength is typically in the range of 200 to 1800 g/25mm, and preferably at least 300, more preferably at least 400g/25mm, and preferably in the range of 400-1500g/25mm, preferably 400-1200 g/25mm. In an alternative embodiment, the heat-seal bond ruptures during the cooking cycle, i.e. so that the composite film provides a self-venting packaging. An increase in the pressure within the packaging above a pre-determined threshold during the cooking cycle causes rupture of the heat-seal bond, enabling venting to occur through the ruptured heat-seal bond. Variation of the chemistry and thickness of the heat-sealable layer, and/or variation of the heat-seal bond-forming process conditions, as described herein, can provide the manufacturer with control over the time at which the bond fails during the cooking cycle for a fixed and prescribed power input during the cooking cycle. In addition, variation of the package design and the sealing technique can provide the manufacturer with control of the locus of failure within the heat-seal bond, which may be advantageous in preventing undesirable release from the packaging of liquids during the cooking cycle, and/or in allowing an easy and clean opening of the packaging by the consumer once the cooking cycle has finished.

The hot-tack adhesion strength of the film may be adjusted to ensure good performance of the film in use on a tray filling and sealing or lidding line. A film which shows good hot-tack on a filling line has a preferred hot-tack value, measured as described hereinbelow, of at least 3 Newtons, preferably at least 4 Newtons, but preferably no more than about 5 Newtons, and is preferably in the range of from about 3 to about 5 Newtons.

The respective layers of the composite film are described in more detail below.

The substrate layer is a self supporting film or sheet by which is meant a film or sheet capable of independent existence in the absence of a supporting base. The film-forming thermoplastic copolyester resin of the substrate layer is the major component of the substrate, and makes up at least 50%, preferably at least 65%, preferably at least 80%, preferably at least 90%, and preferably at least 95% by weight of the total weight of the substrate.

The synthetic linear copolyesters useful for the substrate layer is obtained by condensing the dicarboxylic acids or their lower alkyl diesters, e.g. terephthalic acid (TA), isophthalic acid, phthalic acid, 2,5-, 2,6- or 2,7-naphthalenedicarboxylic acid, succinic acid, sebacic acid, adipic acid, azelaic acid, 4,4'-diphenyldicarboxylic acid, hexahydroterephthalic acid or 1,2-bis-p-carboxyphenoxyethane (optionally with a monocarboxylic acid, such as pivalic acid) with one or more glycols, particularly an aliphatic or cycloaliphatic glycol, e.g. ethylene glycol, 1,3-propanediol, 1,4-butanediol, neopentyl glycol, 1,4-cyclohexanedimethanol and diethylene glycol. Aliphatic glycols are preferred, and preferably ethylene glycol, optionally with no more than 5 mol% diethylene glycol (relative to the total diol content of the polyester). Thus, the glycols are suitably low molecular weight diols (i.e. having a molecular weight below 250), and it is not envisaged that the glycols used in the copolyester of the substrate layer are selected from poly(alkylene oxide) glycols, such as PEG, which typically have an average molecular weight of over 250, more typically at least 400 and more typically at least about 1000. The copolyester of the substrate layer contains at least one aromatic dicarboxylic acid, preferably selected from the aromatic dicarboxylic acids noted above, and preferably said at least one aromatic dicarboxylic acid is TA. In one embodiment, the copolyester contains only one aromatic dicarboxylic acid, which is preferably TA. It is not envisaged that dicarboxylic acid monomers used in the present invention are sulphonated, i.e. it is not envisaged that they selected from dicarboxylic acids which contain a sulphonic acid group or salt thereof (i.e. dicarboxylic acids which contain an -SO₃X moiety where X is H or an alkali metal, such as sodium sulfo-isophthalate). The copolyester of the substrate layer further contains at least one (typically only one) saturated aliphatic dicarboxylic acid of the general formula CₙH₂ₙ(COOH)₂ wherein n is 2 to 8, such as azelaic acid. In one embodiment, the dicarboxylic acid fraction of the copolyester of the substrate layer consists of at least one (and preferably only one) aromatic dicarboxylic acid, as defined above, and at least one (and preferably only one) aliphatic dicarboxylic acid, as defined above.

Preferably, the copolyester of the substrate comprises at least 90mol% relative to the total diacid fraction of the copolyester of an aromatic dicarboxylic acid, and no more than 10mol% relative to the total diacid fraction of the copolyester of an aliphatic dicarboxylic acid.

The substrate layer may contain recycle material up to a level of 50% by weight of the substrate layer, and preferably at least 10%, preferably at least 25%, and more preferably at least 40% by weight of the substrate layer. By "recycle material", we mean waste material consisting of the composite film of the present invention, and such waste material may be derived from edge-trimming (typically the edge portions of the film which are held by the stenter clips during film manufacture), from excess film left over after the film has been slit along its longitudinal dimension, from start-up film (i.e. the film produced at the start of a manufacturing run), or from film that has been failed for other reasons, as is well-known in the art. It is surprising that recycle material may be used in the substrate layer in such high proportions given that it contains the wax from the heat-sealable layer without causing problems in the film making process.

The substrate may comprise one or more discrete coextruded layers of the above film-forming materials. The polymeric materials of the respective layers may be the same or different. For instance, the substrate may comprise one, two, three, four or five or more layers and typical multi-layer structures may be of the AB, ABA, ABC, ABAB, ABABA or ABCBA type. Preferably, the substrate comprises one layer.

The heat-sealable layer is capable of forming a heat-seal bond to the surfaces of the container, and predominantly comprises polymeric material. The polymeric material is the major component of the heat-sealable layer, and the polymeric material makes up at least 50%, preferably at least 65%, preferably at least 80%, preferably at least 90%, and preferably at least 95% by weight of the total weight of the heat-sealable layer. The polymeric material of the heat-sealable layer softens to a sufficient extent that its viscosity becomes low enough to allow adequate wetting for it to adhere to the surface to which it is being bonded. The heat-seal bond is effected by heating to soften the polymeric material of the heat-sealable layer, and applying pressure, without melting the other layers in the film. Thus, the polymeric material of the heat-sealable layer should begin to soften at a temperature such that the heat-seal bond can be formed at a temperature which is less than the melting temperature of the polymeric material of the substrate. In one embodiment, the polymeric material of the heat-sealable layer should begin to soften at a temperature such that the heat-seal bond can be formed at a temperature which is between about 5 and 50°C below, preferably between about 5 and 30°C below, and preferably at least about 10°C below the melting temperature of the polymer material of the substrate.

In a preferred embodiment, the heat-sealable layer comprises, and typically consists essentially of, a copolyester resin derived from at least one (and preferably only one) aromatic dicarboxylic acid and at least one (and preferably only one) aliphatic dicarboxylic acid (or their lower alkyl (i.e. up to 14 carbon atoms) diesters) with one or more glycol(s).

Formation of the copolyester is conveniently effected in known manner by condensation, or ester-interchange, at temperatures generally up to 275°C. Preferably, the aromatic dicarboxylic acids are selected from terephthalic acid, isophthalic acid, phthalic acid, and 2,5-, 2,6- or 2,7-naphthalenedicarboxylic acid, and preferably the aromatic dicarboxylic acid is terephthalic acid. It is not envisaged that dicarboxylic acid monomers used in the heat-sealable layer are sulphonated, i.e. it is not envisaged that they are selected from dicarboxylic acids which contain a sulphonic acid group or salt thereof (i.e. dicarboxylic acids which contain an -SO₃X moiety where X is H or an alkali metal, such as sodium sulfo-isophthalate). Preferred aliphatic dicarboxylic acids are saturated aliphatic dicarboxylic acids of the general formula CₙH₂ₙ(COOH)₂ wherein n is 2 to 8, such as succinic acid, sebacic acid, adipic acid, azelaic acid, suberic acid or pimelic acid, preferably sebacic acid, adipic acid and azelaic acid, and more preferably azelaic acid. In one embodiment, the polyester contains no more than 90% of aromatic dicarboxylic acid (preferably TA) and at least 10% of aliphatic dicarboxylic acid, the percentages being the mole percentage of the total diacid content of the polyester, provided that the copolyesters of the substrate and heat-sealable layers are different, as discussed hereinabove with regard to relative softening temperatures. Preferably, the concentration of the aromatic dicarboxylic acid present in the copolyester is no more than 80 mole%, and preferably in the range from 45 to 80 mole%, more preferably 50 to 70 mole%, and particularly 55 to 65 mole % based on the dicarboxylic acid components of the copolyester. The concentration of the aliphatic dicarboxylic acid present in the copolyester is at least 20 mole%, and preferably in the range from 20 to 55, more preferably 30 to 50, and particularly 35 to 45 mole % based on the dicarboxylic acid components of the copolyester. Preferred glycols are aliphatic glycols, and more preferably alkylene glycols. Thus, suitable glycol(s) include aliphatic diols such as ethylene glycol, diethylene glycol, triethylene glycol, propylene glycol, 1,3-butane diol, 1,4-butane diol, 1,5-pentane diol, 2,2-dimethyl-1,3-propane diol, neopentyl glycol and 1,6-hexane diol. Ethylene glycol or 1,4-butanediol is preferred. Thus, the glycols are suitably low molecular weight diols (i.e. having a molecular weight below 250), and it is not envisaged that the glycols used in the copolyester of the heat-sealable layer are selected from poly(alkylene oxide) glycols, such as PEG, which typically have an average molecular weight of over 250, more typically at least 400 and more typically at least 1000. The copolyester of the heat-sealable layer is thus suitably a linear copolyester. The manufacture of the heat-sealable layer is typically effected using a single polyester species, rather than a blend of different polyesters.

The T_{g} of the copolyester is no more than 20°C, preferably no more than 10°C, preferably no more than 0°C, and preferably no more than 10°C. In one embodiment, the melting point Tₘ of the copolyester is preferably no more than 160°C, preferably no more than 150°C, more preferably no more than 140°C, and preferably no more than 13 0°C.

Particularly preferred examples of such copolyesters are (i) copolyesters of azelaic acid and terephthalic acid with an aliphatic glycol, preferably ethylene glycol; (ii) copolyesters of adipic acid and terephthalic acid with an aliphatic glycol, preferably ethylene glycol; and (iii) copolyesters of sebacic acid and terephthalic acid with an aliphatic glycol, preferably butylene glycol. Preferred polymers include a copolyester of sebacic acid/terephthalic acid/butylene glycol (preferably having the components in the relative molar ratios of 45-55/55-45/100, more preferably 50/50/100) having a glass transition point (Tg) of -40°C and a melting point (Tₘ) of 117°C), and a copolyester of azelaic acid/terephthalic acid/ethylene glycol (preferably having the components in the relative molar ratios of 40-50/60-50/100, more preferably 45/55/100) having a T_{g} of -15°C and a Tₘ of 150°C.

The heat-sealable layer comprises one or more waxes, and typically only one type of wax. The wax may be a natural or synthetic wax, and preferably has a melting point of at least 50°C. Natural waxes are preferably either vegetable waxes (such as carnauba wax) or mineral waxes (such as montan waxes and ozocerite). Paraffin waxes (highly-refined low-molecular weight waxes comprising straight-chain hydrocarbons) may also be used. Examples of synthetic waxes include Fischser-Tropsch waxes (produced by coal gasification, and having a molecular weight in the range from 300 to 1400 g/mol)), and oxidised and non-oxidised (preferably oxidised) low molecular weight polyethylene waxes (having a molecular weight in the range from 500 to 3000 g/mol) as well as the corresponding polypropylene waxes. However, a preferred class of waxes are amide waxes. Amidic waxes are generally immiscible with the base copolyester of the heat-sealable layer. The amide wax may be a primary, secondary, tertiary or bis (fatty) amide, such as oleamide and erucamide. Examples of the different types include primary fatty amides such as erucamide, behenamide, oleamide or stearamide; secondary fatty amides such as stearylerucamide, erucylerucamide, oleylpalmitamide, stearylstearamide or erucyistearamide; tertiary fatty amides such as dimethylstearamide or diethylstearamide; and N,N'-bis (fatty) amides such as N,N'-ethylene bis(stearamide), N,N'-methylene bis(stearamide), N,N'-propylene bis(stearamide), N,N'-ethylene bis(oleamide), N,N'-methylene bis(oleamide), or N,N'-propylene bis(oleamide). Preferably, the wax is selected from N,N'-bis (fatty) amides, and more preferably from N,N'-ethylene bis(oleamide) and N,N'-ethylene bis(stearamide). The wax assists in the manufacture by coextrusion of the composite film comprising the heat-sealable layer referred to above.

In a preferred embodiment, the wax is present at a level of from 0.1 to 3 wt%, preferably from 0.5 to 3 wt%, preferably no more than 2 wt%, and typically from 1 to 2 wt% of the total weight of the heat-sealable layer.

The thickness of the composite film is preferably from 5 to 300 µm, more preferably from 5 to 100 µm, preferably from 5 to 50 µm, preferably from 10 to 30 µm, and typically from 12 to 25 µm in thickness. The substrate layer is significantly thicker than the heat-sealable layer. The thickness of the heat-sealable layer is preferably from 0.5 to 4 µm, preferably from 1.0 µm to 3.0µm, more preferably from 1.5 to 2.5µm.

The composite sheet preferably has an ultimate tensile strength (UTS) in the range of from 14 to 26 Kg/mm².

Formation of the composite is effected by conventional extrusion techniques well-known in the art, and in accordance with the procedure described below. In general terms, the extrusion process comprises the steps of extruding one or more layers of molten polymer, quenching the extrudate and orienting the quenched extrudate in at least one direction.

The film may be uniaxially-oriented, but is preferably biaxially-oriented. Orientation may be effected by any process known in the art for producing an oriented film, for example a tubular or flat film process. Biaxial orientation is effected by drawing in two mutually perpendicular directions in the plane of the film to achieve a satisfactory combination of mechanical and physical properties. In a tubular process, simultaneous biaxial orientation may be effected by extruding a thermoplastic tube which is subsequently quenched, reheated and then expanded by internal gas pressure to induce transverse orientation, and withdrawn at a rate which will induce longitudinal orientation.

In the flat film process, the film-forming polymer is extruded through a slot die and rapidly quenched upon a chilled casting drum to ensure that the polymer is quenched to the amorphous state. Orientation is then effected by stretching the quenched extrudate in at least one direction at a temperature above the glass transition temperature of the substrate polyester. Sequential orientation may be effected by stretching a flat, quenched extrudate firstly in one direction, usually the longitudinal (or machine) direction, i.e. the forward direction through the film stretching machine, and then in the transverse direction. Forward stretching of the extrudate is conveniently effected over a set of rotating rolls or between two pairs of nip rolls, transverse stretching then being effected in a stenter apparatus. Alternatively, the cast film may be stretched simultaneously in both the forward and transverse directions in a biaxial stenter. Stretching is generally effected so that the dimension of the oriented film, particularly a polyester film, is from 2 to 5 times, generally at least 2.5 times, preferably no more than 4.5 times, more typically no more than 4.0 times its original dimension in the or each direction of stretching. In this invention, the stretch ratio in the machine direction (MD) is in the range of from 2.5 to 3.7. For a shrinkable film, the stretch ratio in the transverse dimension (TD) is from 3.0 to 4.3. For thermo-formable films, the stretch ratio in the transverse dimension is from 3.0 to 4.0. The MD stretching step is effected at temperatures higher than the Tg of the polymeric material of the substrate layer, typically less than 30°C above Tg, preferably less than 20°C above Tg and more preferably less than 15°C above Tg of the polymeric material of the substrate layer. Typically, the MD stretching step is conducted in the range of from 55 to 80°C. The TD stretching step is effected at temperatures higher than the Tg of the polymeric material of the substrate layer, typically less than 80°C above Tg, preferably less than 60°C above Tg and more preferably less than 50°C above Tg of the polymeric material of the substrate layer. For the shrinkable films described herein, the TD stretching temperature is typically in the range of from 65 to 100°C, preferably from 65 to 90°C, the film having been pre-heated to a temperature typically in the range of from 55 to 85°C. For the thermo-formable films described herein, the TD stretching temperature is typically in the range of from 90 to 115°C, typically from 90 to 110°C the film having been pre-heated to a temperature typically in the range of from 80 to 95°C. It is not necessary to stretch equally in the machine and transverse directions although this is preferred if balanced properties are desired.

A stretched film may be, and preferably is, dimensionally stabilised by heat-setting under dimensional restraint at a temperature above the glass transition temperature of the substrate polyester but below the melting temperature thereof, to induce crystallisation of the substrate polyester. Heat-setting has the effect of providing dimensional stability to a stretched film, and "locking" the film in its stretched state. The shrinkage behaviour of a film under the action of heat depends on whether, and to what extent, the film was heat-set after any stretching operation(s) effected during its manufacture. In general, a film which has experienced a temperature T₁ during the heat-setting operation will exhibit substantially no shrinkage below temperature T₁ when subsequently exposed to heat after manufacture. As the temperature at which the film is heat set is increased, the tear resistance of the film may change. Thus, the actual heat set temperature and time will vary depending on the composition of the film but should not be selected so as to substantially degrade the tear resistant properties of the film. Within these constraints, a heat-set temperature of from 50 to 250°C is generally desirable, and in one embodiment from 100 to 250°C more typically from 120 to 230°C. For a shrinkable film of the present invention, the heat-set temperature is typically in the range of from 50 to 200°C, preferably from 50 to 185°C, and in one embodiment from 120 to 200°C. For a thermo-formable film of the present invention, the heat-set temperature is typically in the range of from 185 to 225°C. Dimensional relaxation ("toe-in"), wherein the film is allowed to relax in a given dimension by up to 5% and typically 2-4% during the heat-setting step, may be used to modulate shrinkage of the film.

The composite film of the present invention comprising a substrate and a heat-sealable layer is effected by coextrusion, either by simultaneous coextrusion of the respective film-forming layers through independent orifices of a multi-orifice die, and thereafter uniting the still molten layers, or, preferably, by single-channel coextrusion in which molten streams of the respective polymers are first united within a channel leading to a die manifold, and thereafter extruded together from the die orifice under conditions of streamline flow without intermixing thereby to produce a multi-layer polymeric film, which may be oriented and heat-set as hereinbefore described.

One or more of the layers of the film may conveniently contain any of the additives conventionally employed in the manufacture of polymeric films. Thus, agents such as cross-linking agents, dyes, pigments, voiding agents, lubricants, anti-oxidants, radical scavengers, UV absorbers, thermal stabilisers, anti-blocking agents, surface active agents, slip aids, optical brighteners, gloss improvers, prodegradents, viscosity modifiers and dispersion stabilisers may be incorporated as appropriate. In particular the composite film may comprise a particulate filler which may, for example, be a particulate inorganic filler or an incompatible resin filler or a mixture of two or more such fillers. Such fillers are well-known in the art.

Particulate inorganic fillers include conventional inorganic fillers, and particularly metal or metalloid oxides, such as alumina, talc, silica (especially precipitated or diatomaceous silica and silica gels) and titania, calcined china clay and alkaline metal salts, such as the carbonates and sulphates of calcium and barium. The particulate inorganic fillers may be of the voiding or non-voiding type. Suitable particulate inorganic fillers may be homogeneous and consist essentially of a single filler material or compound, such as titanium dioxide or barium sulphate alone. Alternatively, at least a proportion of the filler may be heterogeneous, the primary filler material being associated with an additional modifying component. For example, the primary filler particle may be treated with a surface modifier, such as a pigment, soap, surfactant coupling agent or other modifier to promote or alter the degree to which the filler is compatible with the polymer layer. Preferred particulate inorganic fillers include titanium dioxide and silica. The inorganic filler should be finely-divided, and the volume distributed median particle diameter (equivalent spherical diameter corresponding to 50% of the volume of all the particles, read on the cumulative distribution curve relating volume % to the diameter of the particles - often referred to as the "D(v,0.5)" value) thereof is preferably in the range from 0.01 to 10 µm, more preferably 0.01 to 5 µm, more preferably 0.05 to 1.5 µm, and particularly 0.15 to 1.2 µm. Preferably at least 90%, more preferably at least 95% by volume of the inorganic filler particles are within the range of the volume distributed median particle diameter ± 0.8 µm, and particularly 0.5 µm. Particle size of the filler particles may be measured by electron microscope, coulter counter, sedimentation analysis and static or dynamic light scattering. Techniques based on laser light diffraction are preferred. The median particle size may be determined by plotting a cumulative distribution curve representing the percentage of particle volume below chosen particle sizes and measuring the 50th percentile.

In a preferred embodiment, the heat-sealable layer comprises at least 0.5%, and no more than 5% by weight (based on the total weight of the layer), preferably no more than 2% by weight, and preferably no more than 1.5% weight, of inorganic filler particles. The filler particles are selected from the filler particles referred to hereinabove, and are preferably selected from silica and talc, preferably silica. In this embodiment, the windability of the film (i.e. the absence of blocking or sticking when the film is would up into a roll) is improved, without an unacceptable reduction in haze or other optical properties. It has surprisingly been found that filler added at a level of from 0.5 to 5% by weight provides advantages in terms of the peelability of the film, in that if the upper thresholds of filler as described herein are exceeded, then the film is susceptible to tearing when peeled from the surface (such as the aforementioned container) to which it has been heat-sealed. While the inventors do not intend to be bound by theory, it is believed that the filler particles are very tightly bound to the copolyester used for the heat-sealable layer in the present invention, and that these filler particles are acting as tear-initiation points. It is believed that when the film undergoes a peel, a sufficiently high concentration of filler particles causes the local stress in the polymeric matrix to exceed a critical level and, instead of delamination, the filler adheres to the copolyester, causing a tear.

Thermoformability can be further improved by incorporating a plasticizer, typically in the substrate layer. Suitable plasticizers include aromatic dicarboxylic acid esters such as dimethyl phthalate, diethyl phthalate, di-n-butyl phthalate, di-n-hexyl phthalate, di-n-heptyl phthalate, di-2-ethylhexyl phthalate, di-n-octyl phthalate, di-n-nonyl phthalate, diethyl isophthalate, di-n-butyl isophthalate, di-2-ethylhexyl isophthalate, diethyl terephthalate, din-butyl terephthalate, di-2-ethylhexyl terephthalate, etc.; phosphoric acid esters such as triethyl phosphate, tri-n-butyl phosphate, trioctyl phosphate, cresyl phosphate, etc.; sebacic acid esters such as dimethyl sebacate, diethyl sebacate, di-n-butyl sebacate, diamyl sebacate, etc.; adipic acid esters such as hexyl adipate, etc.; esters such as butyl phthalyl butyl glycolate, tributyl citrate, tetrahydrofurfuryl oleate, methyl acetyl ricinoleate, etc.; and polyethylene glycol, etc. In one embodiment, the plasticizer is selected from aromatic dicarboxylic acid esters (particularly phthalic acid esters) because they have excellent heat resistance, can significantly improve thermformability, and are free from problems of sublimation and bleedout during film-forming process. The melting point at atmospheric pressure of the plasticizer is preferably at least 300°C or higher, more preferably at least 350°C. The content of the plasticizer in the layer is preferably 0.01 to 5 wt%, more preferably 0.05 to 2 wt% based on the weight of the polymeric material of the layer.

The components of the composition of a layer may be mixed together in a conventional manner. For example, by mixing with the monomeric reactants from which the layer polymer is derived, or the components may be mixed with the polymer by tumble or dry blending or by compounding in an extruder, followed by cooling and, usually, comminution into granules or chips. Masterbatching technology may also be employed.

In one embodiment, the film of the present invention is optically clear, preferably having a % of scattered visible light (haze) of <25%, preferably <15%, <10%, preferably <8%, and particularly <6%, measured according to the standard ASTM D 1003.

In an alternative embodiment, the film is opaque and highly filled, preferably exhibiting a Transmission Optical Density (TOD) (Sakura Densitometer; type PDA 65; transmission mode) in the range from 0.1 to 2.0, more preferably 0.2 to 1.5, more preferably from 0.25 to 1.25, more preferably from 0.35 to 0.75 and particularly 0.45 to 0.65. The film is conveniently rendered opaque by incorporation into the polymer blend of an effective amount of an opacifying agent. Suitable opacifying agents include an incompatible resin filler, a particulate inorganic filler or a mixture of two or more such fillers, as hereinbefore described. The amount of filler present in a given layer is preferably in the range from 1% to 30%, more preferably 3% to 20%, particularly 4% to 15%, and especially 5% to 10% by weight, based on the weight of the layer polymer. The surface of an opaque film preferably exhibits a whiteness index, measured as herein described, in the range from 60 to 120, more preferably 80 to 110, particularly 90 to 105, and especially 95 to 100 units.

The surface of the substrate in contact with the heat sealable layer is referred to herein as the primary side. The surface of the substrate opposite to the surface which is in contact with the heat-sealable layer is referred to herein as the secondary side. The secondary side of the substrate may have thereon one or more further polymeric layers or coating materials. Any coating of the secondary side is preferably performed "in-line". The composite film of the invention is intended to be manufactured, stored, sold and used without any additional layers on the exposed surface of the heat-sealable layer.

In one embodiment, the additional coating on the secondary side may comprise a "slip coating" in order to improve the handling and windability of the film. A suitable slip coating may be, for instance a discontinuous layer of an acrylic and/or methacrylic polymeric resin optionally further comprise a cross-linking agent, such as described in EP-A-0408197 . An alternative slip coating may comprise a potassium silicate coating, for instance as disclosed in US Patent Nos. 5925428 and 5882798.

In a further embodiment, the secondary side of the substrate has disposed thereon a printable or ink-receiving layer, and optionally a primer layer (such as that disclosed in EP-0680409, EP-0429179, EP-0408197, EP-0576179 or WO-97/37849 ) between the substrate and the printable or ink-receiving layer in order to increase adhesion. Suitable printable or ink-receiving layers are disclosed in, for instance, EP-0696516, US-5888635, US-5663030, EP-0289162, EP-0349141, EP-0111819 and EP-0680409. A preferred ink-receiving layer comprises an acrylic and/or methacrylic polymeric resin, as disclosed in EP-A-0408197. A preferred receiving layer polymer comprises alkyl acrylate monomer units and alkyl methacrylate monomer units, preferably ethyl acrylate and alkyl methacrylate (preferably methyl methacrylate). In a preferred embodiment, the alkyl acrylate monomer units are present in a proportion from 30 to 65 mole % and the alkyl methacrylate monomer units are present in a proportion from 20 to 60 mole %. In a particularly preferred embodiment, the polymer comprises 35 to 60 mole % ethyl acrylate, 30 to 55 mole % methyl methacrylate and 2 to 20 mole % methacrylamide. Such polymers are preferably applied to the substrate as an aqueous dispersion or alternatively as a solution in organic solvent. The polymer composition may be applied to an already oriented film substrate. However, application is preferably effected before or during the stretching operation(s). Where the substrate is biaxially oriented, the ink-receiving layer is preferably applied between the two stages (longitudinal and transverse) of the biaxial stretching operation.

In one embodiment, the composite film consists of a substrate and a heat-sealable layer, as defined herein, that is to say that no other layers are present in the film. In an alternative embodiment, the composite film consists of a substrate, a heat-sealable layer, and on the secondary surface of the substrate a printable or ink-receiving layer, and optionally an adhesion-promoting primer layer between the substrate and the printable or ink-receiving layer.

The composite film of the present invention is particularly intended for use in association with a container or receptacle for a food product, particularly ready prepared convenience foods which may be warmed in an oven, particularly a microwave oven. However, the invention is also applicable for ready-prepared meals which are intended to be warmed in any other type of oven, such as a conventional convection oven, a direct radiation oven and a forced hot air oven. The container may be, for instance, a thermoformed tray, thermoformed bowl or blow-moulded bottle. The container may be formed of polyester, such as polyethylene terephthalate, or of polypropylene, polystyrene, or may be PVDC coated, or may be glass. The invention is particularly suitable for use with an APET/CPET container, especially a thermoformed tray, which is suitable for packaging food or drink. Other suitable types of container include a metallised tray and a tray formed from PET-coated cartonboard or paperboard. Of particular utility are trays formed from metallised (particularly flash-metallised) PET cartonboard. For example, the tray may be produced from PET which has been metallised to an optical density in the range of about 0.01 to 4.0 and which is laminated to cartonboard. In one embodiment, the tray is a susceptor tray made from materials such as those disclosed in GB-A-2280342, EP-A-0563442 or GB-A-2250408, or is a susceptor tray produced in accordance with the disclosures of these documents.

The composite film described herein, when used as a lidding film for a container, may be shrinkable or thermoformable. A lidding film is preferably both heat-sealable and peelable, as described hereinabove.

According to a further aspect of the invention, there is provided the use of the composite film described herein as, or in the manufacture of, a lidding film suitable for heat-sealing to a receptacle containing a food product, particularly a ready-prepared ovenable meal.

The invention further provides a sealed container comprising a receptacle containing a food product, particularly an ovenable meal, and a lid formed from a composite film as defined herein. The sealed container is produced by techniques well-known to those skilled in the art. Once the food to be packaged has been introduced into the receptacle, the heat-sealable film lid is affixed using temperature and/or pressure using conventional techniques and equipment.

The composite film of the present invention may also be used as "cook-in" packaging, as described herein. Such packaging may take the form of a cook-in bag or pouch wherein the composite film entirely surrounds the food product and in that sense acts as the sole packaging means. In this embodiment, sealing is effected by heat-sealing a first portion of the film to a second portion of the film. Such seals are effected by conventional techniques and include "fin seals" and "overlap seals", and are typically fin seals. The heat-seal bond is typically formed at temperatures in the range of 110 to 150°C. Where the composite film is shrinkable in this embodiment, the film may be shrink-wrapped around the surface of the food product, which is typically effected by immersing the packaged goods in a water tank at temperature above 90°C or by passing through a heat-tunnel in air at a temperature above 90°C.

Other types of "cook-in" packaging include a thermoformable receiving film in association with a separate covering film, which may also be thermoformable. The food product is disposed between the two films, wherein at least one of the contacting surfaces of the receiving and covering films is a heat-sealable surface. A thermoformable and heat-sealable composite film as described herein may be used in such an assembly as the receiving film and/or covering film. In one embodiment, a thermoformable receiving film as described herein is used with a covering film which is a thermoplastic polymeric film, preferably polyester, which is optionally heat-sealable and typically exhibits a low shrinkage (preferably less than 7%, preferably less than 5%, preferably less than 3%, in the machine and/or transverse dimensions, as measured herein). A description of typical thermoforming techniques appears in Modem Plastics Encyclopedia, 1984-1985, at pages 329-336. There are many different forms of thermoforming a plastic sheet including drape forming, vacuum forming, plug-assist forming, plug-assist vacuum forming, deep-draw, matched mold, snapback and twin sheet. Preferably vacuum thermoforming is used, according to conventional techniques and using commercially available equipment. Thus, a raised outer portion and an indented central portion for receiving the food product is provided in the receiving film by thermoforming such that the receiving film substantially assumes the general shape of a tray. Once the food product is suitably disposed thereon, the covering film is then aligned with the filled receiving film and the two films brought into contact and heat-sealed together by the application of heat and pressure, thereby forming sealed packaging. Vacuum may be, and preferably is, applied during the sealing process to evacuate the packaging. Typically, the heat-seal bond is effected within a temperature range of 120 to 180°C. Typically, the residence-time required to effect the heat-seal bond is from 0.1 to 10 seconds. The sealing plate pressure is from about 1 to 10 bars. The packaged food product is typically then cooled to a temperature between -7 and 5 °C in a refrigerator or freezer, and kept at the desired temperature during storage and transportation to the wholesaler, retailer or consumer until the food product is ready to be consumed. In one embodiment, the packaging, particularly if self-venting, can be provided with a liquid-absorbent material or layer which is disposed between the receiving film and the food product in order to absorb any liquid released therefrom during the cooking cycle and prevent it from flowing out of the packaging.

The invention further provides a packaged, sealed food product, particularly an ovenable meal, wherein the packaging comprises a composite film as defined herein. The invention therefore further provides a packaged, sealed food product, particularly an ovenable meal, wherein the packaging which effects and forms the seal around the food product is a composite film, as defined herein, heat-sealed to itself.

Where the packaging is self-venting during the cooking cycle, the self-venting functionality of the packaging is provided and controlled essentially by controlling the strength of the heat-seal bond, rather than by any shrinkage of the film subsequent to the packaging of the food product and during the cook cycle. Preferably, the thermoformable and sealable composite films disclosed herein should not exhibit significant shrinkage during the cooking cycle, i.e. any shrinkage should be less than 5%, preferably less than 3% and preferably less than 2% in the machine and transverse dimensions of the film, for instance as measured by placing the packaging in an oven at 190°C for 5 minutes.

The following test methods may be used to determine certain properties of the polymeric film:
(i) Wide angle haze is measured using a Hazegard System XL-211, according to ASTM D 1003-61.
(ii) Whiteness index is measured using a Colorgard System 2000, Model/45 (manufactured by Pacific Scientific) based on the principles described in ASTM D313.
(iii) Heat-seal strength is measured as follows. The film is sealed, by means of the heat-sealable layer, to a typical APET/CPET tray (obtained from Faerch A/S, Denmark) using a Microseal PA 201 (obtained from Packaging Automation Ltd, England) tray sealer at a temperature of 180°C, and pressure of 80 psi for two seconds. Strips (25 mm wide) of the sealed film and tray are cut out at 90° to the seal, and the load required to pull the seal apart measured using an Instron operating at a crosshead speed of 0.25 mmin⁻¹. The procedure is generally repeated 4 times, and a mean value of 5 results calculated.
(iv) Heat-seal strength of the composite film to itself to itself is measured by positioning together and heating the heat-sealable layers of two samples of the film at 160°C for 0.5 second under a pressure of 80 psi. The sealed film is cooled to room temperature, and the sealed composite cut into 25mm wide strips. The heat-seal strength is determined by measuring the force required under linear tension per unit width of seal to peel the layers of the film apart at a constant speed of 0.25 mmin⁻¹_{.}
(v) Hot-tack adhesion is measured according to ASTM F1921-98 ("Standard test methods for the hot seal strength (hot tack) of thermoplastics polymers and blends comprising the sealing surface of flexible webs") using a Davinor J&B hot tack tester. Strips of the composite film (25 mm wide) are sealed in the machine to an APET/CPET surface (obtained from Faerch A/S, Denmark) at defined conditions of seal temperature and force and the resulting seal strength is measured at a given peel speed at defined times after the seal has been made. In this work, the seal temperature was 150°C; the seal pressure was 1N/mm²; the seal time was 0.5 seconds; the cool time (i.e. the time between making the seal and performing the seal strength measurement) was 0.1 seconds; and the peel speed was 120 mm/s.
(vi) Shrinkage is measured by placing the sample in an oven at a temperature of 190°C for 5 minutes. The shrinkage behaviour is assessed using 5 film samples.
(vii) Ultimate tensile strength is measured according to ASTM D882-88, taking the average of the values in the longitudinal and transverse dimensions of the film.
(viii) Thermoformability can be inferred from the stress-strain curve above the glass transition temperature of the polymer, with reference to the parameters of Young's modulus, yield stress, and post-yield modulus, and particularly with reference to yield stress, and post-yield modulus. A representative stress-strain curve is presented in Figure 1.

The Young's modulus is a measure of the stiffness of a given material. The Young's modulus represents the rate of change of stress with strain and can be determined experimentally from the initial slope of the stress-strain curve during tensile testing. Thus, the Young's modulus is the ratio of the tensile strength to the elongation below the yield stress. The value quoted herein is calculated as the highest ratio between 0 and 10% elongation.

The yield stress may be determined from the stress-strain curve exhibited during tensile testing and represents the stress at which permanent deformation of a stressed specimen begins to take place, i.e. the tensile stress above which the material elongates beyond recovery. The value quoted herein is calculated as the stress at which the tensile to elongation ratio has decreased by 60% from its highest value (i.e the Young modulus). Desirably, the yield stress should be as close to zero as possible at the processing temperature of the thermoforming process.

The post-yield modulus is a measure of strain hardening of a given material and is the slope of the stress-strain curve when a material is strained beyond the yield point. An increasing stress is required to produce additional deformation. Thus, the post-yield modulus coefficient is the ratio of the tensile strength to the elongation above the yield stress (and naturally below the elongation at break). The value quoted herein is calculated as the average ratio between an elongation (%) range from E1 to E2 where (i) 10 ≤ (E2-E1) ≤ 20; (ii) 60 ≤ E2 ≤120; and (iii) 50 ≤E1 ≤ 100 (which range is typically between 60 and 80%, but in some cases between 40 and 60% or 50 and 60% or 100 and 120%, depending on the shape of the curve). Desirably, the post-yield modulus should be as close to zero as possible in the processing region of interest, i.e. the strain and temperature regions utilised in the thermoforming process.

The Young's modulus, the yield stress and the post-yield modulus coefficient are measured at various temperatures: 25°C; Tg; Tg+50°C; and Tg+100°C. Using a straight edge and a calibrated sample cutter (10 mm ±0.5mm in the middle of the strip), five dog-bone shaped strips (500mm in length) of the film are cut along the machine direction. The same procedure is repeated for the transverse direction. Each sample is tested using an Instron model 3111 materials test machine, using pneumatic action grips with rubber jaw faces and a hot box. The temperature is varied as required. The crosshead speed (rate of separation) is 25 mm.min⁻¹. The strain rate is 50%. The elongation is accurately measured by video-recording the distance between two black spots premarked on the strip.
(ix) Glass transition temperature is measured by Differential Scanning Calorimetry (DSC). A 10mg polymer specimen taken from the film is dried for 12 hours under vacuum at 80°C. The dried specimen is heated at 290°C for 2 minutes and then quenched onto a cold block. The quenched specimen is heated from 0°C to 290°C at a rate of 20°C/minute using a Perkin-Elmer DSC7B. The Perkin Elmer was calibrated at a heating rate of 20°C/minute, so cooling temperatures have been corrected by adding 3.9°C to the computer-generated results. The glass transition temperature quoted is onset.
(x) The crystallinity percentage can be measured by Differential Scanning Calorimetry. A 5mg sample taken from the film is heated from 0 to 300°C at 80°C/minute on the Perkin Elmer DSC7B. The crystallinity percentage assumes that crystallinity is present in all the samples.

The invention is further illustrated by the following examples. It will be appreciated that the examples are for illustrative purposes only and are not intended to limit the invention as described above. Modification of detail may be made without departing from the scope of the invention.

### EXAMPLES

### Example 1

A composite film was manufactured by coextrusion in which the first (substrate) layer was an unfilled copolyester of azelaic acid/terephthalic acid/ethylene glycol (6/94/100), and the second layer was a heat-sealable copolyester of azelaic acid/terephthalic acid/ethylene glycol (45/55/100) having a Tg of-15°C and a Tₘ of 150°C. The heat-sealable layer further comprised 1.5% by weight (relative to the total composition of the layer) of an N,N'-ethylene bis(oleamide) wax (EBO; obtained as Crodamide EBO from Croda), and 3% by weight (relative to the total composition of the layer) of silica filler particles with an average particle size of 1 µm.

The copolyesters were coextuded using separate streams supplied from separate extruders, to a single channel coextrusion assembly. The polymer layers were extruded through a film-forming die on to a water-cooled rotating, quenching drum at various line speeds to yield an amorphous cast composite extrudate. The cast extrudate was heated to a temperature of about 60°C and then stretched longitudinally at a forward draw ratio of about 3.5:1. The polymeric film was passed into a stenter oven at a temperature of about 90°C, where the sheet was stretched in the sideways direction to approximately 3.6 times its original dimensions, and then heat-set at temperatures of about 50°C. The final thickness of the film was 26 µm, in which the second (heat-sealable) layer was 2.5 µm in thickness. The film shrinkage was 26% in MD and 42 % in TD. The film had a haze of 15%. The heat-seal strength of the film to itself was 900g/25mm. The film exhibited an easy and clean manual peel from the tray. The heat seal strength of the film to APET was 750 g/25mm. The heat seal strength of the film to CPET was 400 g/25mm.

## Claims

1. A process for the production of a heat-sealable, composite polymeric film which comprises the steps of coextruding a substrate comprising a first copolyester material and a heat-sealable layer comprising a second copolyester material; quenching the extrudate; stretching the quenched extrudate to a stretch ratio in the range from 3.0 to 4.3 in the transverse (TD) direction at a temperature in the range from 65 to 100°C wherein the film has been pre-heated to a temperature in the range from 55 to 85°C; stretching the quenched extrudate to a stretch ratio in the range from 2.5 to 3.7 in the machine direction (MD) at a temperature greater than the Tg of the polymeric substrate; and optionally heat-setting the film at a temperature in the range from 50 to 200°C, wherein:
(i) the first and second copolyester materials are different from each other;
(ii) the copolyester of the substrate layer comprises an aromatic dicarboxylic acid and a saturated aliphatic dicarboxylic acid of formula CₙH₂ₙ(COOH)₂ wherein n is 2 to 8;
(iii) the heat-sealable layer comprises one or more wax(es);
(iv) the T_{g} of the copolyester of the heat-sealable layer is no more than 20°C; and
(v) the composite film is shrinkable.

2. A process for the production of a heat-sealable, composite polymeric film which comprises the steps of coextruding a substrate comprising a first copolyester material and a heat-sealable layer comprising a second copolyester material; quenching the extrudate; stretching the quenched extrudate to a stretch ratio in the range from 3.0 to 4.0 in the transverse (TD) direction at a temperature in the range from 90 to 115°C wherein the film has been pre-heated to a temperature in the range from 80 to 95°C; stretching the quenched extrudate to a stretch ratio in the range from 2.5 to 3.7 in the machine direction (MD) at a temperature greater than the Tg of the polymeric substrate; and optionally heat-setting the film at a temperature in the range from 185 to 225°C, wherein:
(i) the first and second copolyester materials are different from each other;
(ii) the copolyester of the substrate layer comprises an aromatic dicarboxylic acid and a saturated aliphatic dicarboxylic acid of formula CₙH₂ₙ(COOH)₂ wherein n is 2 to 8;
(iii) the heat-sealable layer comprises one or more wax(es);
(iv) the Tg of the copolyester of the heat-sealable layer is no more than 20°C; and
(v) the composite film is thermoformable.

3. A heat-sealable, coextruded composite polymeric film comprising a substrate layer comprising a first copolyester material having on a surface thereof a heat-sealable layer comprising a second copolyester material wherein:
(i) the first and second copolyester materials are different from each other;
(ii) the copolyester of the substrate layer comprises an aromatic dicarboxylic acid and a saturated aliphatic dicarboxylic acid of formula CₙH₂ₙ(COOH)₂ wherein n is 2 to 8;
(iii) the heat-sealable layer comprises one or more wax(es);
(iv) the Tg of the copolyester of the heat-sealable layer is no more than 20°C; and
(v) the composite film is shrinkable.

4. A heat-sealable, coextruded composite polymeric film comprising a substrate layer comprising a first copolyester material having on a surface thereof a heat-sealable layer comprising a second copolyester material wherein:
(i) the first and second copolyester materials are different from each other;
(ii) the copolyester of the substrate layer comprises an aromatic dicarboxylic acid and a saturated aliphatic dicarboxylic acid of formula CₙH₂ₙ(COOH)₂ wherein n is 2 to 8;
(iii) the heat-sealable layer comprises one or more wax(es);
(iv) the Tg of the copolyester of the heat-sealable layer is no more than 20°C; and
(v) the composite film is thermoformable.

5. A film according to claim 3 or claim 4, wherein the copolyester of the substrate comprises at least 90mol% relative to the total diacid fraction of said copolyester of an aromatic dicarboxylic acid, and no more than 10mol% relative to the total diacid fraction of the copolyester of an aliphatic dicarboxylic acid.

6. A film according to any one of claims 3 to 5, wherein the aromatic dicarboxylic acid of the substrate copolyester is terephthalic acid.

7. A film according to any one of claims 3 to 6, wherein said aliphatic dicarboxylic acid is selected from the group consisting of sebacic acid, adipic acid and azelaic acid.

8. A film according to any one of claims 3 to 7 wherein the glycol of the substrate copolyester is ethylene glycol.

9. A film according to any one of claims 3 to 8 wherein the heat-sealable layer comprises a copolyester comprising no more than 90mol% relative to the total diacid fraction of the copolyester of an aromatic dicarboxylic acid, and at least than 10mol% relative to the total diacid fraction of the copolyester of an aliphatic dicarboxylic acid.

10. A film according to claim 9 wherein the heat-sealable layer copolyester comprises terephthalic acid and a saturated aliphatic dicarboxylic acid of formula CₙH₂ₙ(COOH)₂ wherein n is 2 to 8.

11. A film according to claim 9 or 10 wherein the aromatic dicarboxylic acid is present in the heat-sealable copolyester in the range from 45 to 80 mole % based on the dicarboxylic acid components of the copolyester.

12. A film according to any of claims 9 to 11 wherein the copolyester of the heat-sealable layer is a copolyester of azelaic acid and terephthalic acid with ethylene glycol; wherein the relative molar ratios of azelaic acid/terephthalic acid/ethylene glycol are in the range 40-50/60-50/100.

13. A film or process according to any preceding claim, wherein said wax is an amide wax.

14. A film or process according to claim 13 wherein said wax is selected from N, N'-ethylene bis(oleamide) and N, N'-ethylene bis(stearamide).

15. The use of a composite film as defined in any of claims 3 to 14 as, or in the manufacture of, a lidding film for heat-sealing to a receptacle containing a food product.

16. A sealed container comprising a receptacle containing a food product, said container further comprising a lid formed from a composite film as defined in any of claims 3 to 14.

17. A packaged food product wherein the packaging comprises a film as defined in any of claims 3 to 14.

## Patentansprüche

1. Verfahren zur Herstellung einer heißsiegelfähigen Verbundpolymerfolie, bei dem man ein Substrat, das ein erstes Copolyestermaterial umfasst, und eine heißsiegelfähige Schicht, die ein zweites Copolyestermaterial umfasst, coextrudiert; das Extrudat abschreckt; das abgeschreckte Extrudat bei einer Temperatur im Bereich von 65 bis 100°C in Querrichtung (TD) auf ein Streckverhaltnis im Bereich von 3,0 bis 4,3 streckt, wobei die Folie auf eine Temperatur im Bereich von 55 bis 85°C vorerhitzt worden ist; das abgeschreckte Extrudat bei einer über der Tg des Polymersubstrats liegenden Temperatur in Maschinenrichtung (MD) auf ein Streckverhältnis im Bereich von 2,5 bis 3,7 streckt; und gegebenenfalls die Folie bei einer Temperatur im Bereich von 50 bis 200°C thermofixiert, wobei:
(i) das erste Copolyestermaterial und das zweite Copolyestermaterial voneinander verschieden sind;
(ii) der Copolyester der Substratschicht eine aromatische Dicarbonsäure und eine gesättigte aliphatische Dicarbonsäure der Formel CₙH₂ₙ(COOH)₂, worin n für 2 bis 8 steht, umfasst;
(iii) die heißsiegelfähige Schicht ein oder mehrere Wachse umfasst;
(iv) die Tg des Copolyesters der heißsiegelfähigen Schicht höchstens 20°C beträgt; und
(v) die Verbundfolie schrumpffähig ist.

2. Verfahren zur Herstellung einer heißsiegelfähigen Verbundpolymerfolie, bei dem man ein Substrat, das ein erstes Copolyestermaterial umfasst, und eine heißsiegelfähige Schicht, die ein zweites Copolyestermaterial umfasst, coextrudiert; das Extrudat abschreckt; das abgeschreckte Extrudat bei einer Temperatur im Bereich von 90 bis 115°C in Querrichtung (TD) auf ein Streckverhältnis im Bereich von 3,0 bis 4,0 streckt, wobei die Folie auf eine Temperatur im Bereich von 80 bis 95°C vorerhitzt worden ist; das abgeschreckte Extrudat bei einer über der Tg des Polymersubstrats liegenden Temperatur in Maschinenrichtung (MD) auf ein Streckverhältnis im Bereich von 2,5 bis 3,7 streckt; und gegebenenfalls die Folie bei einer Temperatur im Bereich von 185 bis 225°C thermofixiert, wobei:
(i) das erste Copolyestermaterial und das zweite Copolyestermaterial voneinander verschieden sind;
(ii) der Copolyester der Substratschicht eine aromatische Dicarbonsäure und eine gesättigte aliphatische Dicarbonsäure der Formel CₙH₂ₙ(COOH)₂, worin n für 2 bis 8 steht, umfasst;
(iii) die heißsiegelfähige Schicht ein oder mehrere Wachse umfasst;
(iv) die Tg des Copolyesters der heißsiegelfähigen Schicht höchstens 20°C beträgt; und
(v) die Verbundfolie thermoformbar ist.

3. Heißsiegelfähige, coextrudierte Verbundpolymerfolie, umfassend eine Substratschicht, die ein erstes Copolyestermaterial umfasst, mit einer auf einer Oberfläche davon angeordneten heißsiegelfähigen Schicht, die ein zweites Copolyestermaterial umfasst, wobei:
(i) das erste Copolyestermaterial und das zweite Copolyestermaterial voneinander verschieden sind;
(ii) der Copolyester der Substratschicht eine aromatische Dicarbonsäure und eine gesättigte aliphatische Dicarbonsäure der Formel CₙH₂ₙ(COOH)₂, worin n für 2 bis 8 steht, umfasst;
(iii) die heißsiegelfähige Schicht ein oder mehrere Wachse umfasst;
(iv) die Tg des Copolyesters der heißsiegelfähigen Schicht höchstens 20°C beträgt; und
(v) die Verbundfolie schrumpffähig ist.

4. Heißsiegelfähige, coextrudierte Verbundpolymerfolie, umfassend eine Substratschicht, die ein erstes Copolyestermaterial umfasst, mit einer auf einer Oberfläche davon angeordneten heißsiegelfähigen Schicht, die ein zweites Copolyestermaterial umfasst, wobei:
(i) das erste Copolyestermaterial und das zweite Copolyestermaterial voneinander verschieden sind;
(ii) der Copolyester der Substratschicht eine aromatische Dicarbonsäure und eine gesättigte aliphatische Dicarbonsäure der Formel CₙH₂ₙ(COOH)₂, worin n für 2 bis 8 steht, umfasst;
(iii) die heißsiegelfähige Schicht ein oder mehrere Wachse umfasst;
(iv) die Tg des Copolyesters der heißsiegelfähigen Schicht höchstens 20°C beträgt; und
(v) die Verbundfolie thermoformbar ist.

5. Folie nach Anspruch 3 oder Anspruch 4, wobei der Copolyester des Substrats mindestens 90 Mol-%, bezogen auf die gesamte Disäurefraktion des Copolyesters, einer aromatischen Dicarbonsäure und höchstens 10 Mol-%, bezogen auf die gesamte Disäurefraktion des Copolyesters, einer aliphatischen Dicarbonsäure umfasst.

6. Folie nach einem der Ansprüche 3 bis 5, wobei es sich bei der aromatischen Dicarbonsäure des Substratcopolyesters um Terephthalsäure handelt.

7. Folie nach einem der Ansprüche 3 bis 6, wobei die aliphatische Dicarbonsäure aus der Gruppe bestehend aus Sebacinsäure, Adipinsäure und Azelainsäure ausgewählt ist.

8. Folie nach einem der Ansprüche 3 bis 7, wobei es sich bei dem Glykol des Substratcopolyesters um Ethylenglykol handelt.

9. Folie nach einem der Ansprüche 3 bis 8, wobei die heißsiegelfähige Schicht einen Copolyester umfasst, der höchstens 90 Mol-%, bezogen auf die gesamte Disäurefraktion des Copolyesters, einer aromatischen Dicarbonsäure und mindestens 10 Mol-%, bezogen auf die gesamte Disäurefraktion des Copolyesters, einer aliphatischen Dicarbonsäure umfasst.

10. Folie nach Anspruch 9, wobei der Copolyester der heißsiegelfähigen Schicht Terephthalsäure und eine gesättigte aliphatische Dicarbonsäure der Formel CₙH₂ₙ(COOH)₂, worin n für 2 bis 8 steht, umfasst.

11. Folie nach Anspruch 9 oder 10, wobei die aromatische Dicarbonsäure in dem heißsiegelfähigen Copolyester in einer Menge im Bereich von 45 bis 80 Mol-%, bezogen auf die Dicarbonsäurekomponenten des Copolyesters, vorliegt.

12. Folie nach einem der Ansprüche 9 bis 11, wobei es sich bei dem Copolyester der heißsiegelfähigen Schicht um einen Copolyester von Azelainsäure und Terephthalsäure mit Ethylenglykol handelt, wobei die relativen Molverhältnisse von Azelainsäure/Terephthalsäure/Ethylenglykol im Bereich 40-50/60-50/100 liegen.

13. Folie bzw. Verfahren nach einem der vorhergehenden Ansprüche, wobei es sich bei dem Wachs um ein Amidwachs handelt.

14. Folie bzw. Verfahren nach Anspruch 13, wobei das Wachs unter N,N'-Ethylenbis(oleamid) und N,N'-Ethylenbis(stearamid) ausgewählt ist.

15. Verwendung einer Verbundfolie gemäß einem der Ansprüche 3 bis 14 als oder bei der Herstellung einer Deckelfolie zur Heißversiegelung mit einem Behältnis, das ein Lebensmittelprodukt enthält.

16. Versiegelter Behälter, umfassend ein Behältnis, das ein Lebensmittelprodukt enthält, wobei der Behalter ferner einen aus einer Verbundfolie gemäß einem der Ansprüche 3 bis 14 gebildeten Deckel umfasst.

17. Verpacktes Lebensmittelprodukt, wobei die Verpackung eine Folie gemäß einem der Ansprüche 3 bis 14 umfasst.

## Revendications

1. Procédé de production d'un film polymère composite thermoscellable qui comprend les étapes consistant à coextruder un substrat comprenant un premier matériau de copolyester et une couche thermoscellable comprenant un deuxième matériau de copolyester ; tremper l'extrudat ; étirer l'extrudat trempé jusqu'à un rapport d'étirage dans la gamme de 3,0 à 4,3 dans le sens travers (TD) à une température dans la gamme de 65 à 100 °C, le film ayant été préchauffé à une température dans la gamme de 55 à 85 °C ; étirer l'extrudat trempé jusqu'à un rapport d'étirage dans la gamme de 2,5 à 3,7 dans le sens machine (MD) à une température supérieure à la Tg du substrat polymère ; et éventuellement, durcir thermiquement le film à une température dans la gamme de 50 à 200 °C, dans lequel :
(i) le premier et le deuxième matériau de copolyester sont différents l'un de l'autre ;
(ii) le copolyester de la couche de substrat comprend un acide dicarboxylique aromatique et un acide dicarboxylique aliphatique saturé de formule CₙH₂ₙ(COOH)₂ dans laquelle n vaut de 2 à 8 ;
(iii) la couche thermoscellable comprend une ou plusieurs cires ;
(iv) la Tg du copolyester de la couche thermoscellable est inférieure ou égale à 20 °C ; et
(v) le film composite est rétractable.

2. Procédé de production d'un film polymère composite thermoscellable qui comprend les étapes consistant à coextruder un substrat comprenant un premier matériau de copolyester et une couche thermoscellable comprenant un deuxième matériau de copolyester ; tremper l'extrudat ; étirer l'extrudat trempé jusqu'à un rapport d'étirage dans la gamme de 3, à à 4, 0 dans le sens travers (TD) à une température dans la gamme de 90 à 115 °C, le film ayant été préchauffé à une température dans la gamme de 80 à 95 °C ; étirer l'extrudat trempé jusqu'à un rapport d'étirage dans la gamme de 2,5 à 3,7 dans le sens machine (MD) à une température supérieure à la Tg du substrat polymère ; et éventuellement, durcir thermiquement le film à une température dans la gamme de 185 à 225 °C, dans lequel :
(i) le premier et le deuxième matériau de copolyester sont différents l'un de l'autre ;
(ii) le copolyester de la couche de substrat comprend un acide dicarboxylique aromatique et un acide dicarboxylique aliphatique saturé de formule CₙH₂ₙ(COOH)₂ dans laquelle n vaut de 2 à 8 ;
(iii) la couche thermoscellable comprend une ou plusieurs cires ;
(iv) la Tg du copolyester de la couche thermoscellable est inférieure ou égale à 20 °C ; et
(v) le film composite est thermoformable.

3. Film polymère composite thermoscellable coextrudé comprenant une couche de substrat comprenant un premier matériau de copolyester avec sur une surface de celle-ci une couche thermoscellable comprenant un deuxième matériau de copolyester, dans lequel :
(i) le premier et le deuxième matériau de copolyester sont différents l'un de l'autre ;
(ii) le copolyester de la couche de substrat comprend un acide dicarboxylique aromatique et un acide dicarboxylique aliphatique saturé de formule CₙH₂ₙ(COOH)₂ dans laquelle n vaut de 2 à 8 ;
(iii) la couche thermoscellable comprend une ou plusieurs cires ;
(iv) la Tg du copolyester de la couche thermoscellable est inférieure ou égale à 20 °C ; et
(v) le film composite est rétractable.

4. Film polymère composite thermoscellable coextrudé comprenant une couche de substrat comprenant un premier matériau de copolyester avec sur une surface de celle-ci une couche thermoscellable comprenant un deuxième matériau de copolyester, dans lequel :
(i) le premier et le deuxième matériau de copolyester sont différents l'un de l'autre ;
(ii) le copolyester de la couche de substrat comprend un acide dicarboxylique aromatique et un acide dicarboxylique aliphatique saturé de formule CₙH₂ₙ(COOH)₂ dans laquelle n vaut de 2 à 8 ;
(iii) la couche thermoscellable comprend une ou plusieurs cires ;
(iv) la Tg du copolyester de la couche thermoscellable est inférieure ou égale à 20 °C ; et
(v) le film composite est thermoformable.

5. Film selon la revendication 3 ou la revendication 4, dans lequel le copolyester du substrat comprend au moins 90 % en moles, par rapport à la fraction totale de diacides dudit copolyester, d'un acide dicarboxylique aromatique, et pas plus de 10 % en moles, par rapport à la fraction totale de diacides du copolyester, d'un acide dicarboxylique aliphatique.

6. Film selon l'une quelconque des revendications 3 à 5, dans lequel ledit acide dicarboxylique aromatique du copolyester du substrat est l'acide téréphtalique.

7. Film selon l'une quelconque des revendications 3 à 6, dans lequel ledit acide dicarboxylique aliphatique est choisi dans le groupe constitué par l'acide sébacique, l'acide adipique et l'acide azélaïque.

8. Film selon l'une quelconque des revendications 3 à 7, dans lequel le glycol du copolyester du substrat est l'éthylène glycol.

9. Film selon l'une quelconque des revendications 3 à 8, dans lequel la couche thermoscellable comprend un copolyester ne comprenant pas plus de 90 % en moles, par rapport à la fraction totale de diacides du copolyester, d'un acide dicarboxylique aromatique, et au moins 10 % en moles, par rapport à la fraction totale de diacides du copolyester, d'un acide dicarboxylique aliphatique.

10. Film selon la revendication 9, dans lequel le copolyester de la couche thermoscellable comprend de l'acide téréphtalique et un acide dicarboxylique aliphatique saturé de formule CₙH₂ₙ(COOH)₂ dans laquelle n vaut de 2 à 8.

11. Film selon la revendication 9 ou 10, dans lequel l'acide dicarboxylique aromatique est présent dans le copolyester thermoscellable dans la gamme de 45 à 80 % en moles, rapporté aux composants acides dicarboxyliques du copolyester.

12. Film selon l'une quelconque des revendications 9 à 11, dans lequel le copolyester de la couche thermoscellable est un copolyester d'acide azélaïque et d'acide téréphtalique avec l'éthylène glycol, les rapports molaires relatifs d'acide azélaïque/acide téréphtalique/éthylène glycol se situant dans la gamme de 40-50/60-50/100.

13. Film ou procédé selon l'une quelconque des revendications précédentes, dans lequel ladite cire est une cire d'amide.

14. Film ou procédé selon la revendication 13, dans lequel ladite cire est choisie parmi le N,N'-éthylène-bis(oléamide) et le N,N'-éthylène-bis(stéaramide).

15. Utilisation d'un film composite selon l'une quelconque des revendications 3 à 14 comme, ou dans la fabrication d'un, film d'operculage pour thermoscellage sur un réceptacle contenant un produit alimentaire.

16. Récipient scellé comprenant un réceptacle contenant un produit alimentaire, ledit récipient comprenant en outre un couvercle formé à partir d'un film composite selon l'une quelconque des revendications 3 à 14.

17. Produit alimentaire emballé dans lequel l'emballage comprend un film selon l'une quelconque des revendications 3 à 14.
